(19) **Europäisches Patentamt**
**European Patent Office**
**Office européen des brevets**

(11) **EP 2 348 557 B1**

(12) **EUROPEAN PATENT SPECIFICATION**

(45) Date of publication and mention
of the grant of the patent:
**03.07.2013 Bulletin 2013/27**

(51) Int Cl.:
*H01M 2/02* *(2006.01)*　　*H01M 10/052* *(2010.01)*

(21) Application number: **10169657.3**

(22) Date of filing: **15.07.2010**

(54) **Secondary battery**

Sekundärbatterie

Batterie secondaire

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **13.01.2010 US 282279 P**

(43) Date of publication of application:
**27.07.2011 Bulletin 2011/30**

(73) Proprietor: **Samsung SDI Co., Ltd.**
**Suwon-si, Gyeonggi-do 443-731 (KR)**

(72) Inventors:
• **Park, Sung-Ho**
**446-711, Gyeonggi-do (KR)**

• **Shin, Man-Soo**
**446-711, Gyeonggi-do (KR)**
• **Lim, Jong-Hoon**
**446-711, Gyeonggi-do (KR)**

(74) Representative: **Gulde Hengelhaupt Ziebig & Schneider**
**Patentanwälte - Rechtsanwälte**
**Wallstrasse 58/59**
**10179 Berlin (DE)**

(56) References cited:
**EP-A1- 1 447 864　　EP-A1- 1 610 407**
**JP-A- 10 255 727　　US-A- 6 033 800**
**US-A1- 2005 196 663**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

**Field of the invention**

One or more embodiments of the present invention relate to a secondary battery, and more particularly, to a secondary battery capable of efficiently distributing internal pressure.

**Description of Related Art**

Currently, compact and light electric/electronic devices such as cellular phones, laptop computers and camcorders are being actively developed and produced. These portable electric/electronic devices include a battery pack so as to operate at places where no power source is provided. The battery pack may include a secondary battery that is rechargeable and dischargeable, and may output a certain level of voltage to drive a portable electric/electronic device for a certain period of time.

Secondary batteries include, for example, nickel (Ni)-cadmium (Cd) batteries, Ni-hydrogen (H) batteries and lithium (Li) batteries. In this case, for example, Li secondary batteries have a operation voltage of about 3.6V, that is, three times higher than that of Ni-Cd batteries or Ni-H batteries, and have a high energy density for unit weight, and thus are rapidly becoming popular.

Most Li secondary batteries use a Li-based oxide as a positive electrode active material and a carbon material as a negative electrode active material. In general, according to the type of electrolyte, Li secondary batteries are divided into liquid electrolyte batteries and polymer electrolyte batteries. Li secondary batteries using a liquid electrolyte are referred to as Li ion batteries and Li secondary batteries using a polymer electrolyte are referred to as Li polymer batteries. Also, Li secondary batteries are manufactured in various shapes such as a cylinder shape, a rectangular shape and a pouch shape.

A Li ion secondary battery may include an electrode assembly in which a positive electrode plate on which a positive electrode active material is coated, a negative electrode plate on which a negative electrode active material is coated, and a separator disposed between the positive and negative electrode plates so as to prevent a short and to allow movement of Li ions are winded or stacked, a case for accommodating the electrode assembly, and an electrolyte injected into the case so as to allow movement of Li ions.

In a Li ion secondary battery, an electrode assembly is formed by winding or stacking a positive electrode plate on which a positive electrode active material is coated and to which a positive electrode tab is connected, a negative electrode plate on which a negative electrode active material is coated and a negative electrode tab is connected, and a separator. In this case, the positive electrode active material contains a complex Li oxide as a main component, and may be, for example, $LiCoO_2$ formed by mixing carbonic acid Li and cobalt (Co) oxide in a ratio of 1.2:1 and baking the mixture at a temperature within about 400°C to about 1000°C. The Li secondary battery may be completely formed by accommodating the electrode assembly into a case, injecting an electrolyte into the case, and then sealing the case.

When the Li secondary battery is repeatedly recharged, the electrode assembly may repeatedly expand and contract. The expansion and contraction of the electrode assembly may cause a swelling phenomenon such that the case may expand.

European patent application 1 447 864 A1 discloses a rechargeable battery comprising a case, wherein at least one surface of the case comprises a plurality of ridges for withstanding pressure and preventing bulging deformation. Analogously, Japanese Patent 10 255727 A and United States Patent 6,033,800 A disclose a battery container comprising grooves and projections in order to enhance stability of the battery container.

**SUMMARY OF THE INVENTION**

One or more embodiments of the present invention include a secondary battery capable of efficiently distributing internal pressure and increasing rigidity.

According to one or more embodiments of the present invention, a secondary battery comprises: an electrode assembly having at least one first electrode, at least one second electrode, and a separator interposed between the at least one first electrode and the at least one second electrode; a case adapted for accommodating the electrode assembly; a positive terminal and a negative terminal, the terminals being adapted to electrically connect the electrode assembly to an external device, wherein at least one surface of the case comprises a plurality of ridges, wherein each of the plurality of ridges complies with at least one of the conditions (i) to (iv):

(i) a ratio of the height of the ridge to the width of the ridge ranges between 0.02 and 0.5,

(ii) an angle of the ridge ranges between 2° and 45°, the angle being measured with respect to a connection line between adjacent valleys of the ridge,

(iii) a maximum radius curvature of the ridge (b) ranges between 0 and 50% of the width of the ridge,

(iv) a ratio of the number of ridges arranged along an axis parallel to an edge of the surface to the extent of the edge of the surface ranges between 0.02/mm and 0.24/mm. At least one of the plurality of ridges is arranged concentrically with respect to the centre of the at least one surface.

Preferably, the at least one surface of the case is a planar surface. Preferably, the projection of each of the plurality of ridges onto the planar surface comprises a shape selected from the group of a longish shape, a circular shape, and a triangle shape. Preferably, all surfaces of the case are planar surfaces.

Preferably, the case has a rectangular shape. Preferably, the case has a cuboid-like shape. Preferably, the number of ridges arranged on the surface of the case ranges between 1 and 10. Preferably, a ratio of the height of the ridge to the width of the ridge ranges between 0.02 and 0.33. Preferably, a ratio of the height of the ridge to the width of the ridge ranges between 0.026 and 0.188.

Preferably, at least two of the conditions selected from the group of conditions (i) to (iv) are met. Preferably, at least three of the conditions selected from the group of conditions (i) to (iv) are met. Preferably, all of the conditions (i) to (iv) are met.

Preferably, the plurality of ridges is uniformly distributed on the at least one surface of the case. Preferably, the plurality of ridges is periodically distributed on the at least one surface of the case. Preferably, the plurality of ridges is repeatedly arranged on the at least one surface of the case. Preferably, the arrangement of the plurality of ridges is oscillating on the at least one surface of the case.

Preferably, the at least one surface has a rectangular shape and the plurality of ridges extend along at least one of a first axis and a second axis, the first axis being parallel to a first edge of the rectangular surface and the second axis being parallel to a second edge of the rectangular surface and perpendicular to the first axis.

Preferably, the rechargeable battery is a lithium secondary battery. Preferably, the rechargeable battery further comprises a cap plate adapted for sealing an opening of the case. Preferably, the rechargeable battery further comprises a vent hole formed in the cap plate and a vent plate closing the vent hole.

Preferably, the surface of the plurality of ridges has at least a curved portion, the maximum radius curvature of the curved portion ranges between 0 and 50% of the width of the ridge.

According to one or more embodiments of the present invention, an electric vehicle comprising the above described secondary battery is disclosed. Preferably, the electric vehicle is a hybrid electric vehicle.

According to the one or more embodiments of the present invention, a secondary battery may compensate or prevent volume expansion during recharge and discharge and may prevent displacement of an electrode assembly which is caused by increase of internal pressure.

Preferably, a ratio of the height of the ridge to the width of the ridge ranges between 0.02 and 0.33, more preferably between 0.15 and 0.25. Preferably, an angle of the ridge ranges between 2° and 45°, more preferably between 5° and 40°. Preferably, a maximum radius curvature of the ridge ranges between 0 and 50% of the width of the ridge, more preferably between 0 and 30%. Preferably, a ratio of the number of ridges to the extent of the edge ranges between 0.02/mm and 0.24/mm, more preferably between 0.10/mm and 0.24/mm.

Preferably, the ridges face towards the inner space of the case. Preferably, the ridges face away from the inner space of the case.

According to the invention, preferably no further means for increasing the rigidity of the case are provided. That is, the electrolyte is preferably in direct contact with the inner side of the case (with the ridges).

## BRIEF DESCRIPTION OF THE DRAWINGS

FIG. 1 is a schematic perspective view of a secondary battery;

FIG. 2 is a cross-sectional view cut along a line II-II of FIG. 1;

FIG. 3 is a schematic perspective view of a case including different-length sides;

FIG. 4A is a schematic perspective view of a case on which ridges are formed so as to increase a unit area of the case, according to an embodiment which is not part of the present invention;

FIG. 4B is a schematic conceptual view of a portion IVb illustrated in FIG. 4A;

FIG. 5 is a schematic conceptual view for describing the principal of pressure distribution;

FIG. 6A illustrates a side view and a front view of a plate for describing the principal of bending stress;

FIG. 6B illustrates a side view and a front view of a structure on which a ridge is formed;

FIG. 7 is a schematic conceptual view of a ridge having a width, a height, an angle and a curvature;

FIG. 8A is a schematic perspective view showing stress when internal pressure is applied to a rectangular case;

FIG. 8B is a schematic perspective view showing a displacement amount on the case illustrated in FIG. 8A;

FIG. 8C is a front view of the case illustrated in FIG. 8A;

FIG. 9A is a schematic perspective view of a case on which concentric ridges are formed from the center of a surface of the case in correspondence with variations in displacement amount, according to an embodiment of the present invention;

FIG. 9B is a cross-sectional view cut along a line IXb-IXb of FIG. 9A;

FIG. 10A is a schematic perspective view of a case on which ridges are formed on a surface of the case in correspondence with stress-concentrated portions, according to an embodiment which is not part of the present invention;

FIG. 10B is a cross-sectional view cut along a line Xb-Xb of FIG. 10A;

FIG. 11A is a schematic perspective view of a case on which concentric ridges and linear ridges are formed on a surface of the case in correspondence with variations in displacement amount and stress-concentrated portions, according to another embodiment of the present invention;

FIG. 11B is a cross-sectional view cut along a line XIb-XIb of FIG. 11A;

FIG. 12A is a schematic perspective view of a case on which concentric ridges, linear ridges and radial ridges are formed on a surface of the case in correspondence with variations in displacement amount and stress-concentrated portions, according to another embodiment of the present invention;

FIG. 12B is a cross-sectional view cut along a line XIIb-XIIb of FIG. 12A;

FIG. 13A is a schematic perspective view showing stress distribution when one ridge is formed on a case, according to a comparative embodiment;

FIG. 13B is a schematic perspective view showing a displacement amount on the case illustrated in FIG. 13A;

FIG. 13C is a front view of the case illustrated in FIG. 13A;

FIG. 14A is a schematic perspective view showing stress distribution when two ridges are formed on a case, according to another comparative embodiment;

FIG. 14B is a schematic perspective view showing a displacement amount on the case illustrated in FIG. 14A;

FIG. 14C is a front view of the case illustrated in FIG. 14A;

FIG. 15A is a schematic perspective view showing stress distribution when eight ridges are formed on four sides of a case, according to another comparative embodiment;

FIG. 15B is a schematic perspective view showing a displacement amount on the case illustrated in FIG. 15A;

FIG. 15C is a front view of the case illustrated in FIG. 15A; and

FIG. 15D is a side view of the case illustrated in FIG. 15A.

## DETAILED DESCRIPTION OF THE INVENTION

Hereinafter, the present invention will be described in detail by explaining embodiments of the invention with reference to the attached drawings.

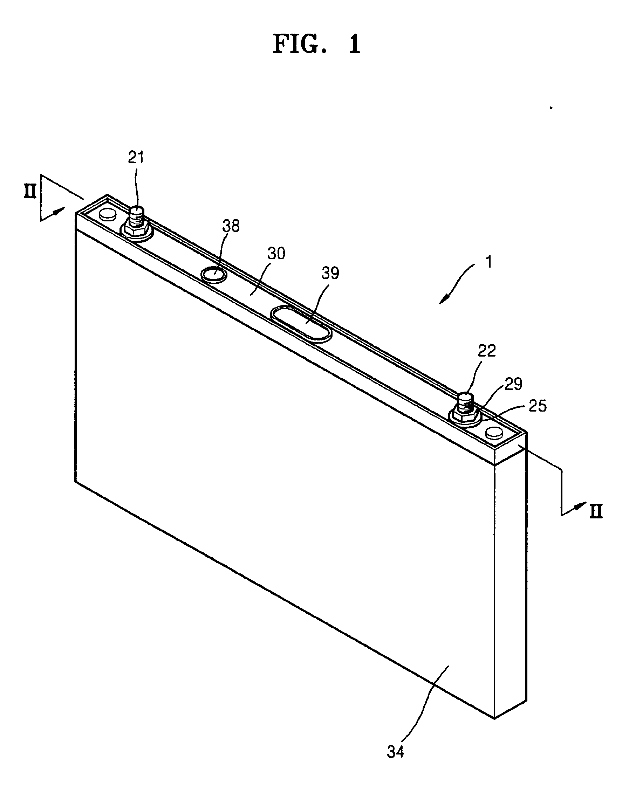

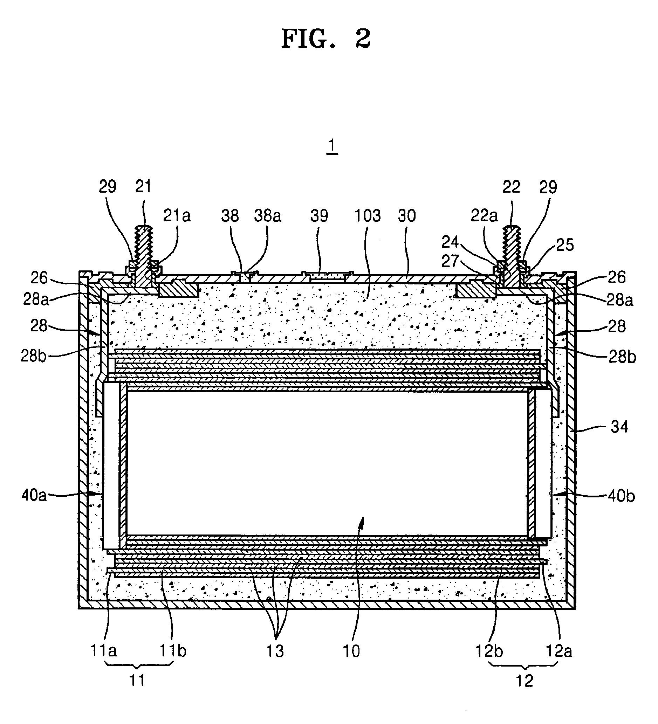

The structure of a secondary battery 1 will now be described with reference to FIGS. 1 and 2 before describing the structure of a case 34 capable of efficiently withstanding internal pressure. FIG. 1 is a schematic perspective view of the secondary battery 1. FIG. 2 is a cross-sectional view cut along a line II-II of FIG. 1.

Referring to FIGS. 1 and 2, the secondary battery 1 includes an electrode assembly 10, positive and negative terminals 21 and 22, and a case 34. In this case, the case 34 accommodates the electrode assembly 10 and the electrode assembly 10 may be electrically connected to an external device via the positive and negative terminals 21 and 22.

The electrode assembly 10 includes a positive electrode 11, a negative electrode 12, and a separator 13. In this case, the positive and negative electrodes 11 and 12 may be wound with the separator 13, i.e., an insulator, interposed therebetween so as to form the electrode assembly 10. In this case, a center pin may be disposed in the electrode assembly 10 and the positive and negative electrodes 11 and 12 may be wound around the center pin. Alternatively, the positive electrode 11, the separator 13 and the negative electrode 12 may be stacked. The positive and negative electrodes 11 and 12 may respectively include positive and negative uncoated parts 11 a and 12a and positive and negative coated parts 11 b and 12b. Each of the positive and negative uncoated parts 11 a and 12a may be a region of a current collector formed of thin metal foil on which an active material is not coated. Each of the positive and negative coated parts 11 b and 12b may be a region of a current collector formed of thin metal foil on which an active material is coated. A positive current collecting unit 40a may be welded to the positive uncoated part 11 a of the electrode assembly 10. The positive current collecting unit 40a may be electrically connected to the positive terminal 21 via a lead member 28. As such, the positive terminal 21 may be connected to the positive electrode 11 of the electrode assembly 10 via the lead member 28 and the positive current collecting unit 40a. A negative current collecting unit 40b may be electrically connected to the negative terminal 22 via the lead member 28. As such, the negative terminal 22 may be connected to the negative electrode 12 of the electrode assembly 10 via the lead member 28 and the negative current collecting unit 40b. An insulating member 26 may be formed between the lead member 28 and a cap plate 30. The lead member 28 may include a current collecting lead unit 28b bonded to the positive and negative current collecting units 40a and 40b and a terminal lead unit 28a bonded to the positive and negative terminals 21 and 22. The positive and negative terminals 21 and 22 may be respectively and electrically connected to the positive and negative electrodes 11 and 12 of the electrode assembly 10 and may protrude out of the case 34.

The case 34 may include the cap plate 30 on one side. The case 34 may have a rectangular can shape of which one side is open and the open side of the case 34 may be sealed by using the cap plate 30. The cap plate 30 may cover the case 34 while allowing the positive and negative terminals 21 and 22 to protrude out of the case 34. When the electrode assembly 10 and an electrolyte 103 are accommodated in the case 34, the case 34 and the cap plate 30 may be laser-welded to each other so as to seal the electrode assembly 10 and the electrolyte in the case 34. The cap plate 30 may be a thin plate. Also, the cap plate 30 may include a vent member 39 on which grooves to be broken when the internal pressure of the case 34 reaches a preset value are formed. Here, an electrolyte inlet 38a through which the electrolyte is injected into the case 34 may be formed in the cap plate 30. A sealing plug 38 may fit in the electrolyte inlet 38a.

In this case, although the secondary battery 1 has a rectangular shape in FIGS. 1 and 2, the present invention is not limited thereto and the secondary battery 1 may have various shapes. For example, the secondary battery 1 may be a cylinder-type secondary battery or a polymer-type secondary battery. In this case, the electrode assembly 10 may also be formed as a winding type with a center pin or a stacking type.

Here, in the secondary battery 1, the electrode assembly 10 may expand or contract due to recharge and discharge. The expansion and contraction of the electrode assembly 10 may act as a physical force on the case 34 and thus the case 34 may expand or contract accordingly. As such, the expansion and contraction of the electrode assembly 10 may displacement the case 34. Also, repeated expansion and contraction of the electrode assembly 10 may fix the displacement of the case 34. If the case 34 is displaced due to the electrode assembly 10 being expanded, the efficiency of the secondary battery 1 may be reduced. Also, when recharge and discharge are repeated, an active material coated on the positive and negative coated parts 11 b and 12b may be removed or may deteriorate.

The present invention provides structures of the case 34 capable of distributing internal pressure and increasing rigidity by modifying the case 34 without having any further components. In order to lower stress on the case 34 and to reduce a displacement amount on the case 34 when the electrode assembly 10 expands, the case 34 may satisfy any of the following three conditions. First, a surface area of the case 34 may be increased. Second, the internal pressure in the case 34 may be distributed. Third, the rigidity of the case 34 may be increased. The three conditions with respect to the case 34 will now be described in detail.

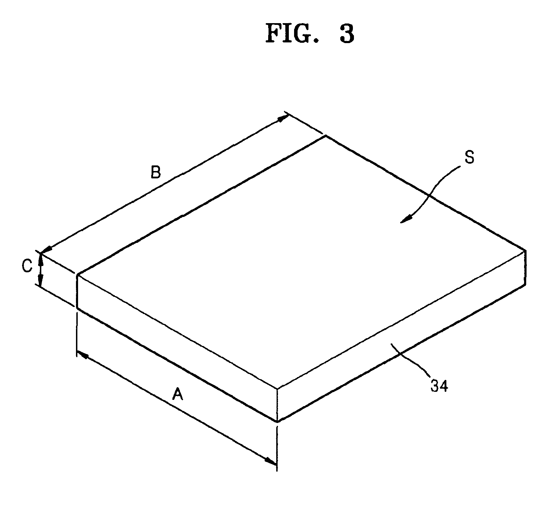

First, referring FIG. 3, increasing a surface area of the case 34 to suppress displacement of the case 34 will now be described. FIG. 3 is a schematic perspective view of the case 34 including sides having lengths A, B and C. Stress σ will be described with reference to FIG. 3. The stress σ refers to a force F that acts on a unit area S. The stress σ is defined as represented in Equation 1.

<Equation 1>

$$\sigma = \frac{Force(F)}{UnitArea(S)} \propto \frac{1}{S}$$

Here, for example, the force F may be generated due to the internal pressure in the case 34' which is caused by expansion or contraction of the electrode assembly 10 illustrated in FIG. 2. However, the cause of the force F is not limited thereto and the force F may be generated due to various causes such as an increase in the internal pressure due to a gas being generated in the case 34'. The unit area S refers to a surface area of the case 34' on which the force F acts.

In this case, according to Equation 1, the stress σ is inversely proportional to the unit area S. Accordingly, when the force F is constant, if the unit area S increases, the stress σ decreases. In this case, the decreasing of the stress σ means that the force F on the unit area S (F/S) to displacement the case 34' in a region of the case 34' decreases. Accordingly, in order to withstand the internal pressure of the case 34' and to efficiently suppress displacement of the case 34', the case 34' may have a structure for increasing the unit area S. In this case, displacement on the case 34' may be suppressed by distributing a direction of the force F as well as by increasing the unit area S of the case 34'.

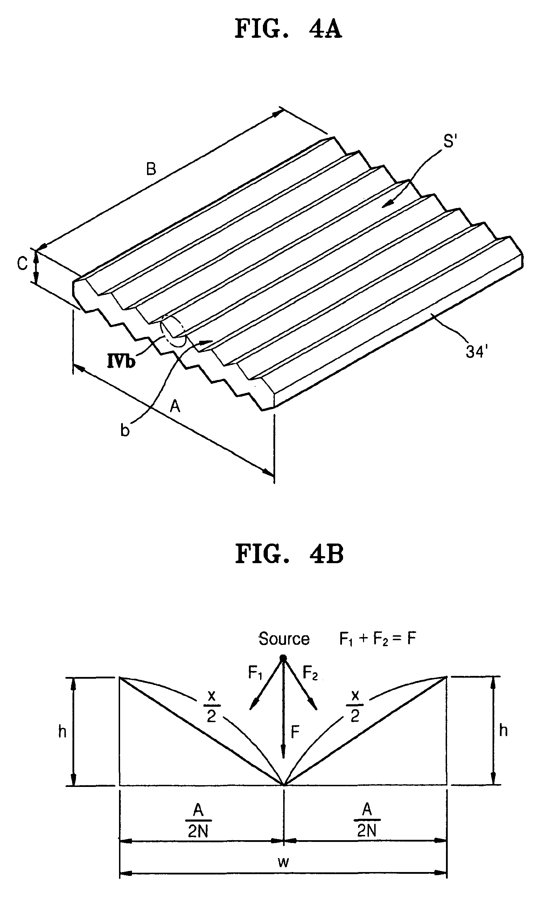

The case 34' having roughness in order to increase the unit area S will now be described with reference to FIGS. 4A and 4B, which are not part of the present invention. As illustrated in FIGS. 4A and 4B, in order to increase the unit area S of the case 34', ridges b (also referred to as "beads") having the same ratio of a width w to a peak height h may be formed on surfaces of the case 34'. In this case, the ridges b are not restricted to having the same size. The ridges b may have different sizes in the same ratio of the width w to the peak height h. Also, when one side of the case 34' has a length (A) and a number of ridges b (N) are formed on the side having the length (A), the width w of the ridges

b is $\dfrac{A}{N}$. . In this case, as illustrated in FIG. 4B, a length x of a hypotenuse of the ridges b may be calculated as represented in Equation 2 by using the Pythagorean theorem.

<Equation 2>

$$x = 2A\sqrt{\frac{1}{4N^2} + (\frac{h}{A})^2}$$

In this case, here, since the N ridges b are formed on the case 34', the unit area S' satisfies Equation 3.

<Equation 3>

$$S' = x \cdot N \cdot B = B\sqrt{A^2 + 4N^2h^2}$$

Accordingly, in order to maximize the unit area S', the number N and the peak height h of the ridges b have to have infinity. However, since the number N and the peak height h of the ridges b may not have infinity due to a manufacturing process, ranges of the number N and the peak height h of the ridges b are determined by distributing pressure and increasing rigidity.

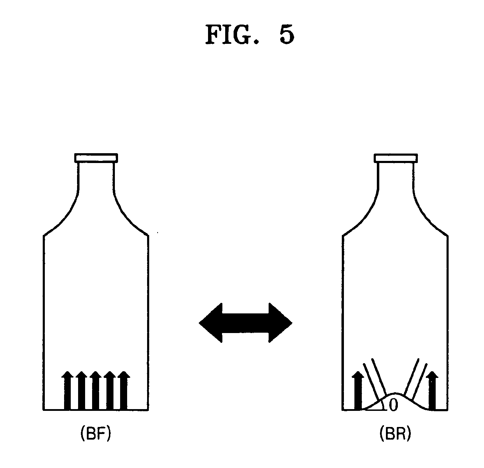

The principal of pressure distribution will now be described with reference to FIG. 5. Referring to FIG. 5, in comparison to a bottle having a flat bottom surface BF, a bottle having an internally protruding bottom surface BR may distribute pressure applied onto the bottom surface so as to stand against high pressure. In this case, internal pressure distribution may differ according to a width w and a peak height h of a round ridge formed in the bottom surface. In this case, when an angle θ of the ridge is equal to 45°, force distribution is maximized. Accordingly, the angle θ of the ridge may be equal to or less than 45°. Here, when the angle θ of the ridge is 45°, $\dfrac{h}{w}$ is $\dfrac{1}{2}$ and thus $\dfrac{h}{w} \times 100\%$ may be equal to or less than 50%.

In this case, the bottle having the internally protruding bottom surface BR may also compensate volume expansion of the bottle. In more detail, when the bottle expands due to an increase in internal pressure, the internally protruding bottom surface may protrude externally so as to increase the internal volume of the bottle, thereby preventing the bottle from being broken or exploding. The same principal may also be applied to the case 34' illustrated in FIG. 4A. When the internal pressure in the case 34' increases, the ridges b protruding into the case 34' may protrude out of the case 34' so as to compensate for the increase in the internal pressure, and thus the case 34' may be prevented from being broken or exploding.

The height h of the ridges is generally defined as an elevation above the (planar) surface on which the ridge is formed. However, for example as shown in Fig. 4, there is not always a distinguishable (planar) surface on which the ridge is formed. Accordingly, in such a case, the height h of the ridges is understood as a peak-to-valley distance measured along an axis which is perpendicular to a longitudinal axis of the ridges and which is perpendicular to a direction along which the ridges extend.

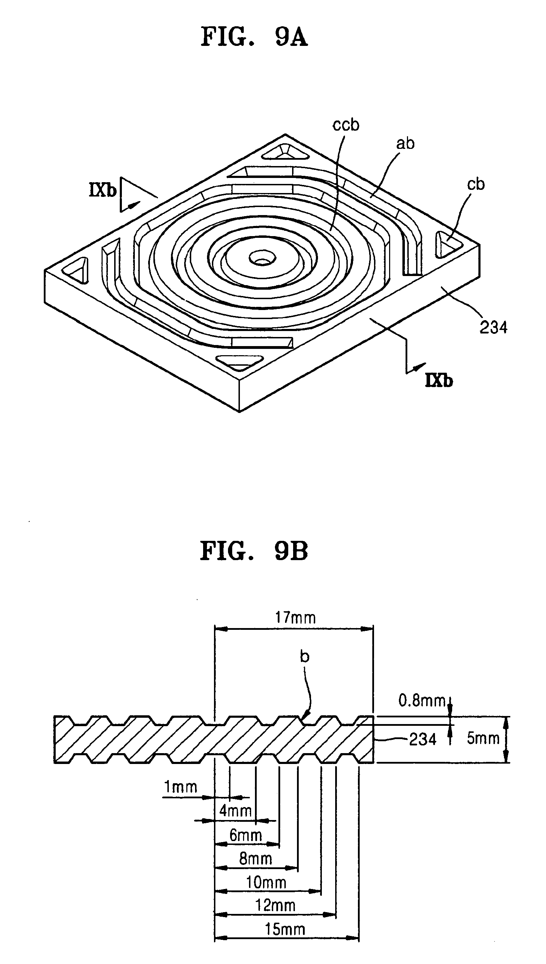

For circular ridges as for example shown in Fig. 9A and 9B, the height h of the ridges is understood as a peak-to-valley distance measured along an axis which is parallel to a tangent of the ridge and which is parallel to a direction along which the centres of curvature extend.

In case of non-planar surfaces the height h of the ridges is understood as a peak-to-valley distance measured along an axis which is parallel to a normal vector of a surface area which is directly adjacent to the (lowest) valley portion of the ridge.

In case the ridge does not comprise a longish shape the width is understood as a dimension measured along an axis perpendicular to a longest extension of the ridge. In cases where the ridges have a longish shape, i.e. a longitudinal axis, the width is understood as dimension measured along an axis perpendicular to a longitudinal axis of the ridge.

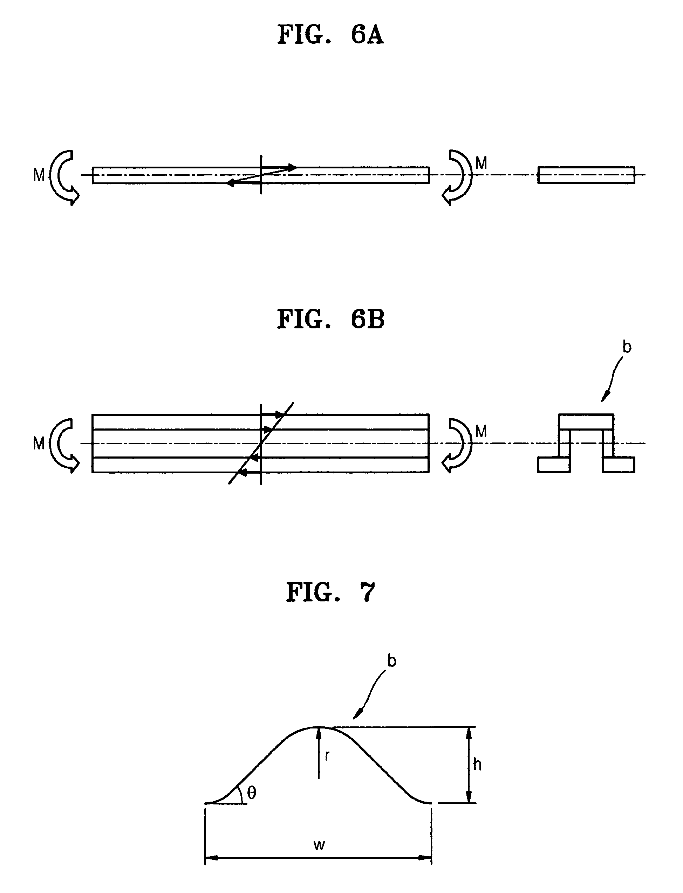

FIG. 6A illustrates a side view and a front view of a plate for describing the principal of bending stress. FIG. 6B illustrates a side view and a front view of a structure on which a ridge b is formed. In FIGS. 6A and 6B, arrows represent the bending stress. The bending stress may be represented by Equation 4.

<Equation 4>

$$\sigma = \frac{M \times c}{I}$$

Here, σ represents the bending stress, M represents a bending moment, c represents a distance from a central axis to an outer surface, on which the maximum stress occurs, and I represents a moment of inertia. As represented in Equation 4, the bending stress σ is inversely proportional to the moment of inertia I and thus the bending stress σ may be reduced by increasing the moment of inertia I. If the ridge b is formed on the plane in order to increase the moment of inertia I, the bending stress σ may be reduced. That is, the ridge b may be formed on a surface of the case 34 illustrated in FIG. 3 in order to increase the bending stress σ.

In this case, as illustrated in FIG. 7, parameters that determine the bending stress σ are a width w, a peak height h, an angle θ and a curvature r of the ridge b. Where and in which direction the ridge b is formed on the case 34' also influence the bending stress σ. Here, an angle θ of the ridge b is equal to or less than 45°. Also, since force distribution is maximized when the shape of the ridge b is a semicircle. Thus, a curvature r has a maximum value when a diameter of the ridge b is equal to a width w of the ridge b ($2r \leq w$).

When the parameters satisfy ranges listed in Table 1, the case 34' may withstand internal pressure more efficiently. That is, the case 34' may efficiently distribute internal pressure and may increase rigidity in the ranges listed in Table 1.

[Table 1]

| Parameter | | Range |
|---|---|---|
| Ratio of Peak Height to Width of Ridge | $(\frac{h}{w} \times 100)$ | 0~50% |
| Ratio of Number of Ridges to Length of One Side $(\frac{N}{A(mm)} \times 100)$ | | 2%~24% |
| Number of Ridges (N) | | 1~10 |
| Angle of Ridge (θ) | | 0< θ ≤ 45° |
| Curvature of Ridge (r) | | 0< r ≤ $\frac{w}{2}$ |

In this case, the ratio of the peak height to the width of the ridge may be in a range from about 0% to about 50% and, more particularly, in a range from about 2% to about 33%. In this case, the number of ridges is not restricted but may particularly be in a range from about 1 to about 10.

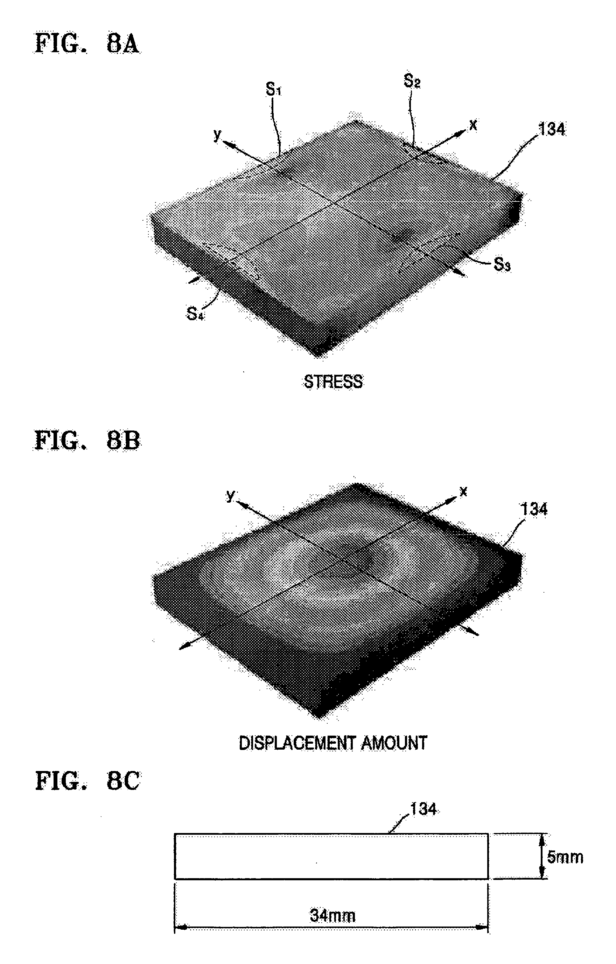

Where and in which direction the ridges b are formed on the case 134 will now be described with reference to FIGS. 8A through 8C. FIG. 8A is a schematic perspective view showing stress due to internal pressure in a rectangular case 134. FIG. 8B is a schematic perspective view showing a displacement amount on the case 134 illustrated in FIG. 8A. FIG. 8C is a front view of the case 134 illustrated in FIG. 8A. Referring to FIG. 8A, $S_1$, $S_2$, $S_3$ and $S_4$ represent stress-concentrated portions on the case 134 and are symmetrical with respect to x and y axes. According to an exemplary embodiment which is not part of the present invention, in order to distribute stress on the case 134, the ridges b may be formed on the case 134 symmetrically with respect to the x axis, the y axis, or both the x and y axes, for instance in the regions $S_1$, $S_2$, $S_3$ and $S_4$ of Fig. 8A. Also, the ridges b do not always need to be sequentially formed and may be partially formed in correspondence with displacement- or stress-concentrated portions so as to distribute displacement or stress. Referring to FIG. 8B, the amount of displacement may be concentrated concentrically from the intersection of the x and y axes of the case 134. Thus, in order to suppress the displacement, ridges b may be formed concentrically from the intersection of the x and y axes of the case 134.

Hereinafter, shapes and arrangements of the ridges b will be described with reference to FIGS. 9A and 9B, 10A and 10B, 11A and 11B, and 12A and 12B, and variations in displacement amount according to the number N and the ratio of the peak height h to the width $w\left(\dfrac{h}{w}\times 100\right)$ of the ridges b will be described with reference to FIGS. w 13A through 13C, 14A through 14C, and 15A through 15D.

The shapes and arrangements of the ridges b formed on the case 134 will be described with reference to FIGS. 9A and 9B, 10A and 10B, 11 A and 11B, and 12A and 12B.

Referring to FIG. 8A, a displacement amount varies concentrically from the center of a surface of the rectangular case 134 (an origin of x and y coordinates). Also, the portions $S_1$, $S_2$, $S_3$ and $S_4$ corresponding to four sides from the center of the surface are stress-concentrated portions. Accordingly, the ridges b may be formed concentrically from the center of the surface, may be formed in correspondence with the stress-concentrated portions, or may be formed concentrically from the center of the surface and in correspondence with the stress-concentrated portions.

FIG. 9A is a schematic perspective view of a case 234 on which concentric ridges ccb are formed from the center of a surface of the case 234 in correspondence with variations in displacement amount, according to another embodiment of the present invention. FIG. 9B is a cross-sectional view cut along a line IXb-IXb of FIG. 9A. In this case, the ridges b may include the concentric ridges ccb, linear ridges lb and radial ridges rb formed in correspondence with stress-concentrated portions or variations in displacement amount, and may also include corner ridges cb and assistant ridges ab formed in correspondence with the arrangement and functions of the ridges b.

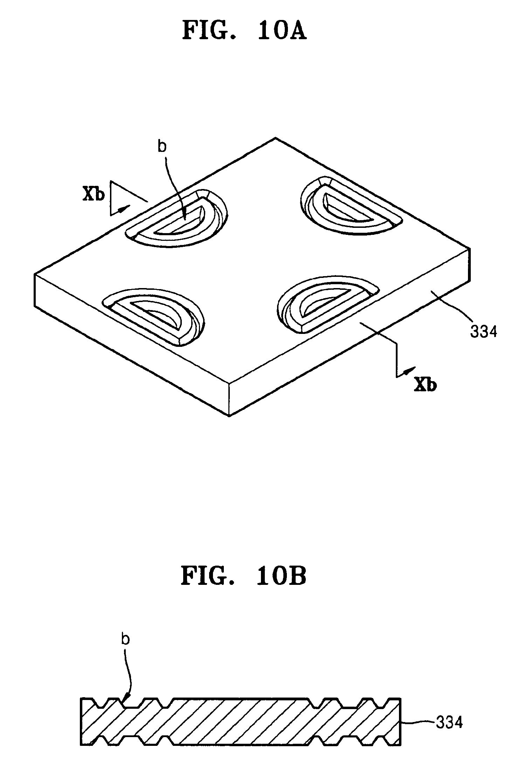

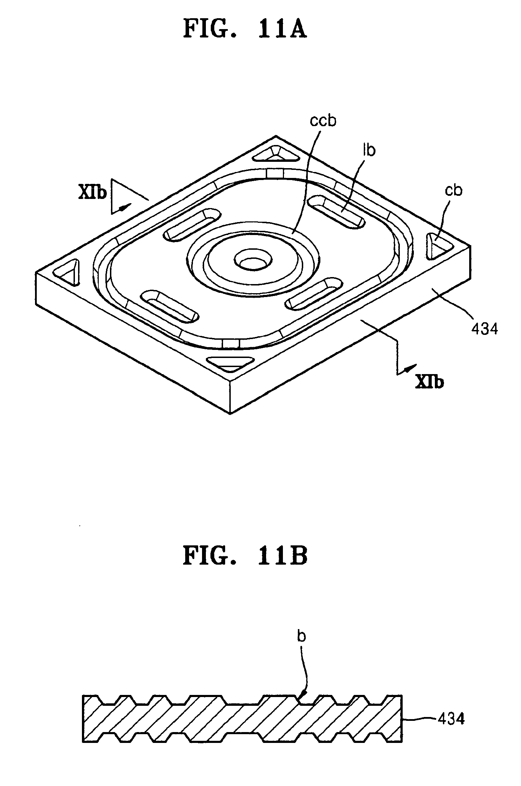

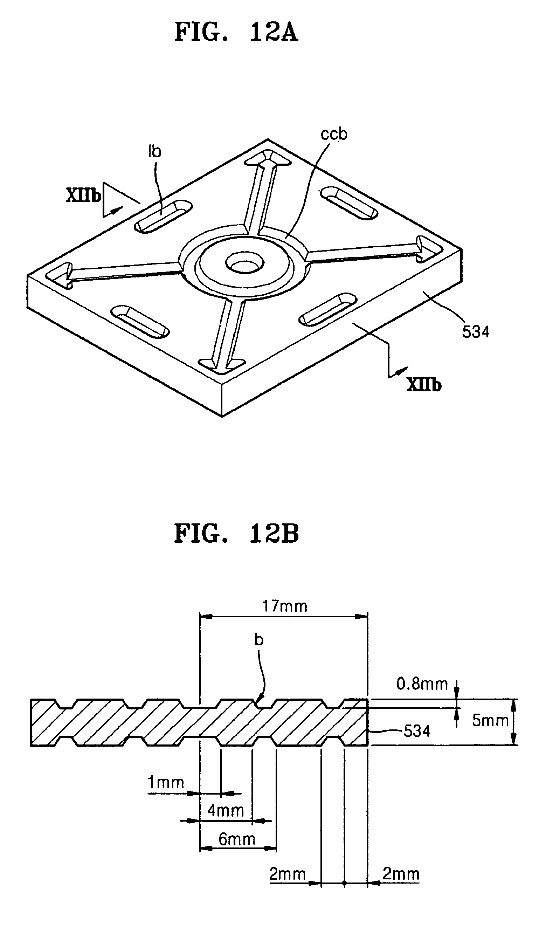

Referring to FIGS. 9A and 9B, the concentric ridges ccb may be formed around the center of the surface of the case 234. In this case, the corner ridges cb may be additionally formed at corners of the case 234. Also, if the surface of the case 234 on which the ridges b are formed is not rectangular, the assistant ridges ab may also be formed in correspondence with the shape of remaining portions where the concentric ridges ccb are not formed. In an alternative embodiment, which is not part of the present invention, the ridges b may be formed in correspondence with the portions $S_1$, $S_2$, $S_3$ and $S_4$ illustrated in FIG. 8A, where stress is concentrated, as illustrated in FIGS. 10A and 10B. FIG. 10A is a schematic perspective view of a case 334 on which ridges b are formed on a surface of the case 334 in correspondence with stress-concentrated portions, according to another embodiment of the present invention. FIG. 10B is a cross-sectional view cut along a line Xb-Xb of FIG. 10A. Referring to FIGS. 10A and 10B, the ridges b may be formed in correspondence with portions of the case 334 where stress is concentrated, i.e., on perpendicular lines from the center of the surface to four sides of the case 334. As such, the stress-concentrated portions are formed on the x or y axis of the rectangular case 334 and thus the ridges b may be formed such that the centers of the ridges b are disposed on the x or y axis. In this case, the ridges b are not limited to the shape illustrated in FIGS. 10A and 10B and may be various shapes such as linear and non-linear shapes. Also, the ridges b may be formed in correspondence with variations in displacement amount and stress-concentrated portions as illustrated in FIGS. 11A and 11B. FIG. 11A is a schematic perspective view of a case 434 on which the concentric ridges ccb and the linear ridges lb are formed on a surface of the case 434 in correspondence with variations in displacement amount and stress-concentrated portions, according to another embodiment of the present invention. FIG. 11B is a cross-sectional view cut along a line XIb-XIb of FIG. 11A. Referring to FIGS. 11A and 11B, the concentric ridges ccb are formed near the center and sides of the case 434 and the linear ridges lb are formed at the stress-concentrated portions between the concentric ridges ccb. Also, the corner ridges cb may be formed at corners of the case 434. In this case, the ridges b are not limited to the shapes illustrated in FIGS. 11A and 11B and may have various shapes as illustrated in FIGS. 12A and 12B. FIG. 12A is a schematic perspective view of a case 534 on which the concentric ridges ccb, the linear ridges lb and the radial ridges rb are formed on a surface of the case 534 in correspondence with variations in displacement amount and stress-concentrated portions, according to another embodiment of the present invention. FIG. 12B is a cross-sectional view cut along a line XIIb-XIIb of FIG. 12A. Referring to FIGS. 12A and 12B, the radial ridges rb may be formed in addition to the concentric ridges ccb and the linear ridges lb. However, the ridges b may be formed having x-axis symmetry, y-axis symmetry or origin symmetry with respect to the intersection of the x and y axes of a surface of the case 534 in order to distribute stress.

Table 2 illustrates the stress amounts and displacement amounts of the embodiments of FIG. 3, FIGS. 9A through 9B, and FIGS. 12A through 12B.

[Table 2]

|  | Embodiment of FIG. 3 | Embodiment of FIGS. 9A through 9B | Embodiment of FIGS. 12A through 12B |
|---|---|---|---|
| Stress Amount (MPa) | 22.98 | 0.07 | 0.84 |
| Stress Amount Reduction (%) | - | 99% | 96% |

(continued)

|  | Embodiment of FIG. 3 | Embodiment of FIGS. 9A through 9B | Embodiment of FIGS. 12A through 12B |
|---|---|---|---|
| Displacement Amount (mm) | 2.9 | 0.495 | 1.909 |
| Displacement Amount Reduction (%) | - | 83% | 34% |

Referring Table 2, it can be inferred that the stress amounts and displacement amounts of the embodiments of FIGS. 9A through 9B and FIGS. 12A through 12B have been significantly reduced than that of the embodiments of FIG. 3 where no ridges are formed. Also, considering the embodiments of FIGS. 9A through 9B, and FIGS. 12A through 12B, the embodiment of FIGS. 9A through 9B has less strain amount and displacement amount. Here, even though at least one concentric ridge ccb having 2mm width and 0.8mm depth is formed on the embodiments of FIGS. 9A through 9B, and FIGS. 12A through 12B, the amounts of strain and displacement may vary. One of possible reasons for that would be that the additional concentric ridges ccb are formed on the embodiment of FIGS. 9A through 9B whereas further radial ridges rb are formed on the embodiments of FIGS. 12A through 12B. Thus, it can also be inferred that one or more concentric ridges ccb are efficient in reducing the amounts of stress and displacements.

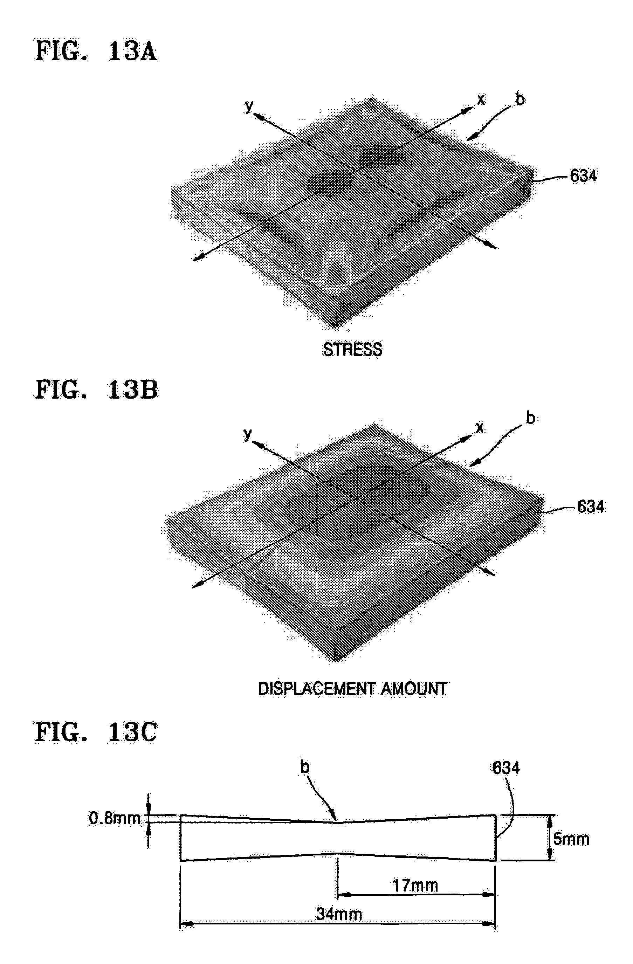

Hereinabove, the shapes and arrangements of the ridges b formed on the case 234, 334, and 434 against stress concentration and displacement are described with reference to FIGS. 9A and 9B, 10A and 10B, 11 A and 11 B, and 12A and 12B. Variations in displacement amount according to the number N and the ratio of the peak height h to the width w $\left( \frac{h}{w} \times 100 \right)$ of the ridges b will now be described with reference to w FIGS. 13A through 13C, 14A through 14C, and 15A through 15D. Here, FIGS. 9A and 9B, 10A and 10B, 11A and 11B, and 12A and 12B may be related to FIGS. 13A through 13C, 14A through 14C, and 15A through 15D. That is, although not described below, the case 34 may have any of the shapes and arrangements of the ridges b illustrated in FIGS. 9A and 9B, 10A and 10B, 11 A and 11 B, and 12A and 12B, and may also have the numbers N and the ratios of the peak height h to the width w $\left( \frac{h}{w} \times 100 \right)$ of the ridges b to w be described with reference to any of FIGS. 13A through 13C, 14A through 14C, and 15A through 15D, at the same time.

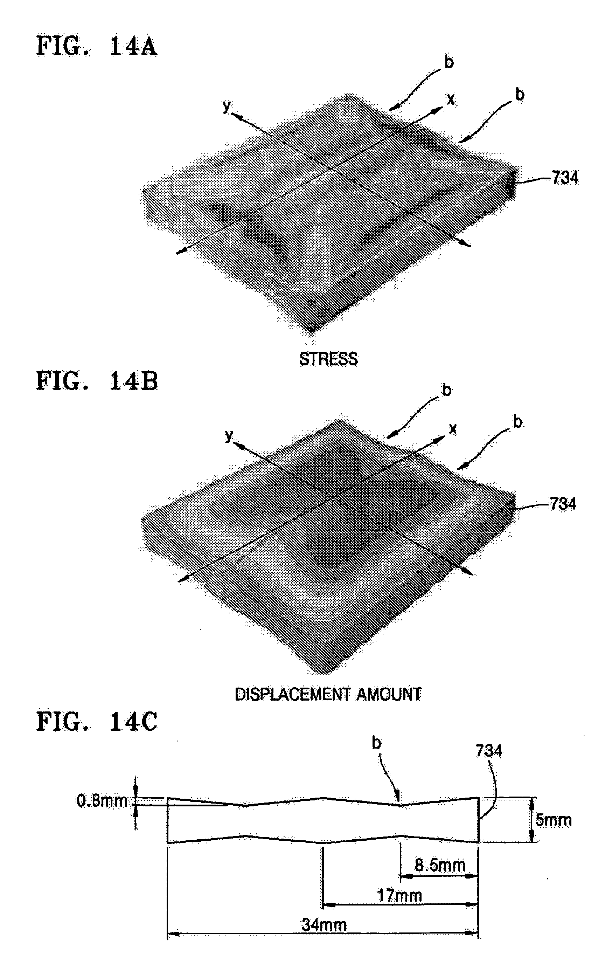

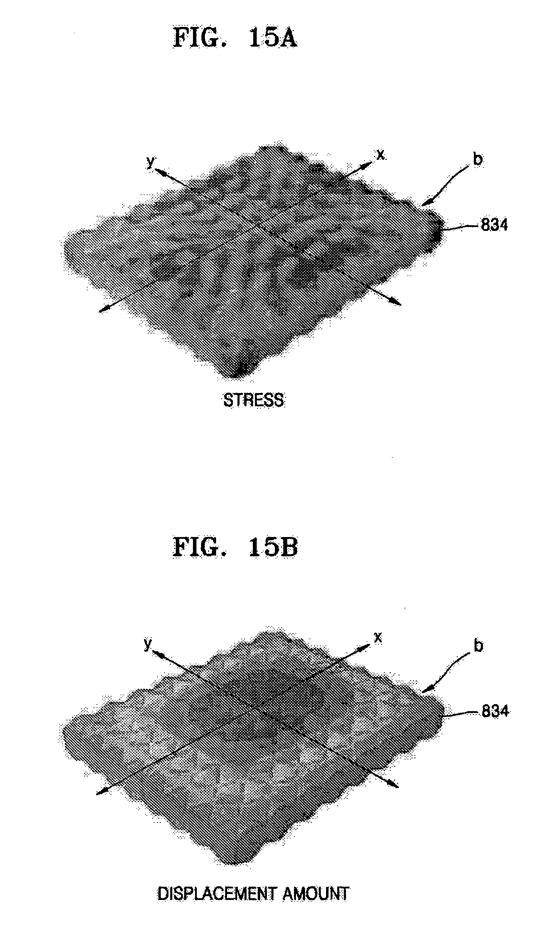

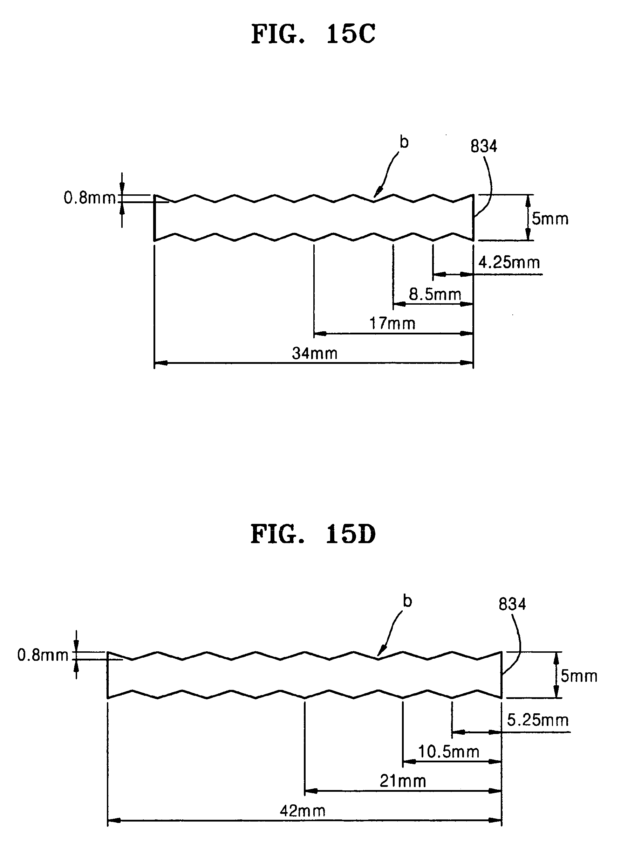

FIG. 13A is a schematic perspective view showing stress distribution when one ridge bis formed on a case 634, according to another embodiment of the present invention. FIG. 13B is a schematic perspective view showing a displacement amount on the case 634 illustrated in FIG. 13A. FIG. 13C is a front view of the case 634 illustrated in FIG. 13A. FIG. 14A is a schematic perspective view showing stress distribution when two ridges b are formed on a case 734, according to another embodiment of the present invention. FIG. 14B is a schematic perspective view showing a displacement amount on the case 734 illustrated in FIG. 14A. FIG. 14C is a front view of the case 734 illustrated in FIG. 14A. FIG. 15A is a schematic perspective view showing stress distribution when eight ridges b are formed on four sides of a case 834, according to another embodiment of the present invention. FIG. 15B is a schematic perspective view showing a displacement amount on the case 834 illustrated in FIG. 15A. FIG. 15C is a front view of the case 834 illustrated in FIG. 15A. FIG. 15D is a side view of the case 834 illustrated in FIG. 15A.

Table 3 shows parameters for simulations of the embodiments of FIGS. 13A through 13C, 14A through 14C, and 15A through 15D. Here, the embodiment of 8A through 8C uses the rectangular case 34 on which the ridges b are not formed and, in Table 3, the embodiments of FIGS. 13A through 13C, 14A through 14C, and 15A through 15D are compared to the embodiment of 8A through 8C with respect to variation in displacement amount.

[Table 3]

|  | Embodiment of 8A through 8C | Embodiment of FIGS. 13A through 13C | Embodiment of FIGS. 14A through 14C | Embodiment of FIGS. 15A through 15D |
|---|---|---|---|---|
| Length of Side (A) | 34 | 34 | 34 | 34 |
| Number of Ridges (N) of Side A | 0 | 1 | 2 | 8 |

(continued)

|  | Embodiment of 8A through 8C | Embodiment of FIGS. 13A through 13C | Embodiment of FIGS. 14A through 14C | Embodiment of FIGS. 15A through 15D |
|---|---|---|---|---|
| Peak Height of Ridge (h) of Side A | 0 | 0.8 | 0.8 | 0.8 |
| Width of Ridge (w) of Side A | 34 | 34 | 17 | 4.25 |
| $\frac{h}{w} \times 100$ of Side A | 0% | 2.6% | 4.7% | 18.8% |
| $\frac{N}{A(mm)} \times 100$ of Side A | 0 | 2.9% | 5.9% | 23.5% |
| Length of Side (B) | 42 | 42 | 42 | 42 |
| Number of Ridges (N) of Side B | 0 | 0 | 0 | 8 |
| Peak Height of Ridge (h) of Side B | 0 | 0 | 0 | 0.8 |
| Width of Ridge (w) of Side B | 42 | 42 | 42 | 5.25 |
| $\frac{h}{w} \times 100$ of Side B | 0% | 0% | 0% | 15.2% |
| $\frac{N}{B(mm)} \times 100$ of Side B | 0% | 0% | 0% | 19% |
| Displacement Amount | 2.9 | 2.8 | 2.5 | 2.1 |
| Displacement Amount Reduction (%) | - | 5% | 13% | 27% |

As shown in Table 3, in comparison to the embodiment of 8A through 8C, the displacement amount is reduced by about 5% in the embodiment of FIGS. 13A through 13C, is reduced by about 13% in the embodiment of FIGS. 14A through 14C, and is reduced by about 27% in the embodiment of FIGS. 15A through 15D. Thus, according to Table 3, as the number N of the ridges b increases, and as the ratio of the peak height h to the width w $\left( \frac{h}{w} \times 100 \right)$ of the ridges b increases, the displacement amount reduction increases. In this case, the ratio of the peak height h to the width w $\left( \frac{h}{w} \times 100 \right)$ of the ridges b may be in a range from about 0% to about 50%, and more particularly, in a range from about 2% to about 33%. In Table 3, the ratio of the peak height h to the width w $\left( \frac{h}{w} \times 100 \right)$ of the ridges b is in a range from about 2.6% to about 18.8%, which is w included in the range from about 2% to about 33%.

In this case, the number N of the ridges b with respect to one side having a length X may be determined by using two methods described below. First, the number N of the ridges b may be determined in a range from about 1 to about 10 regardless of the length X of one side. In this case, the ridges b may have a shape that satisfies the ratio of the peak height h to the width w $\left( \frac{h}{w} \times 100 \right)$ of the ridges, which is indicated in w Table 1. Second, the number N of the ridges b may be determined as an integer close to a value obtained by multiplying the length X of one side by a ratio of the number N of the ridges b to a length of one side $\left( \dfrac{N}{A(mm)} \times 100 \right).$ . In this case, referring to Table 1, the ratio of the number N of the ridges b to the length of one side ; $\left( \dfrac{N}{A(mm)} \times 100 \right)$ may be in a range from about 2% to about 24%.

As such, a case capable of efficiently distributing internal pressure of and increasing rigidity of a secondary battery may be achieved by forming ridges b by controlling locations, a width w, a peak height h, an angle θ, a curvature r, and the number N, and a ratio of the peak height h to the width w $\mathrm{w} \left( \dfrac{h}{w} \times 100 \right)$ ( of the ridges b.

**Claims**

1. A secondary battery (1) comprising:

   an electrode assembly (10) having at least one first electrode (11), at least one second electrode (12), and a separator (13) interposed between the at least one first electrode (11) and
   the at least one second electrode (12);
   a case (34) adapted for accommodating the electrode assembly (10);
   a positive terminal (21) and a negative terminal (22), the terminals (21, 22) being adapted to electrically connect the electrode assembly (10) to an external device,
   wherein at least one surface (S') of the case (34') comprises a plurality of ridges (b), wherein each of the plurality of ridges (b) complies with at least one of the conditions (i) to (iv):

   (i) a ratio of the height (h) of the ridge (b) to the width (w) of the ridge (b) ranges between 0.02 and 0.5,
   (ii) an angle (θ) of the ridge (b) ranges between 2° and 45°, the angle (θ) being measured with respect to a connection line between adjacent valleys of the ridge (b),
   (iii) a maximum radius of curvature of the ridge (b) ranges between 0 and 50% of the width (w) of the ridge (b),
   (iv) a ratio of the number (N) of ridges (b) arranged along an axis parallel to an edge (A) of the surface (S') to the extent of the edge (A) of the surface (S') ranges between 0.02/mm and 0.24/mm and

   **characterized in that**
   at least one of the plurality of ridges (b) has a circular shape and is arranged concentrically with respect to the centre of the at least one surface (S').

2. The rechargeable battery of claim 1, wherein the at least one surface (S') of the case (34') is a planar surface and wherein the projection of each of the plurality of ridges (b) onto the planar surface comprises a shape selected from the group of a longish shape, a circular shape, and a triangle shape.

3. The rechargeable battery according to any one of the preceding claims, wherein the case (34, 34') has a rectangular shape and/or a cuboid-like shape.

4. The rechargeable battery according to any one of the preceding claims, wherein the number of ridges (b) arranged on the surface (S') of the case (34') ranges between 1 and 10.

5. The rechargeable battery according to any one of the preceding claims, wherein a ratio of the height (h) of the ridge (b) to the width (w) of the ridge (b) ranges between 0.02 and 0.33.

6. The rechargeable battery according to claim 5, wherein a ratio of the height (h) of the ridge (b) to the width (w) of the ridge (b) ranges between 0.026 and 0.188.

7. The rechargeable battery according to any one of the preceding claims, wherein at least two of the conditions selected from the group of conditions (i) to (iv) are met.

8. The rechargeable battery according to any one of the preceding claims, wherein at least three of the conditions selected from the group of conditions (i) to (iv) are met.

9. The rechargeable battery according to any one of the preceding claims, wherein all of the conditions (i) to (iv) are met.

10. The rechargeable battery according to any one of the preceding claims, wherein the plurality of ridges (b) is uniformly distributed on the at least one surface (S') of the case (34').

11. The rechargeable battery according to any one of the preceding claims, wherein the at least one surface (S') has a rectangular shape and the plurality of ridges (b) extend along at least one of a first axis and a second axis, the first axis being parallel to a first edge of the rectangular surface (S') and the second axis being parallel to a second edge of the rectangular surface (S') and perpendicular to the first axis.

12. The rechargeable battery according to any one of the preceding claims, wherein the rechargeable battery is a lithium secondary battery; and/or wherein the rechargeable battery further comprises a cap plate (30) adapted for sealing an opening of the case (34); and/or wherein the rechargeable battery further comprises a vent hole formed in the cap plate (30) and a vent plate (39) closing the vent hole.

13. The rechargeable battery according to any one of the preceding claims, wherein the surface of the plurality of ridges (b) has at least a curved portion, the maximum radius of curvature of the curved portion ranges between 0 and 50% of the width (w) of the ridge (b).

14. An electric vehicle comprising the secondary battery (1) of any one of claims 1 to 13.

**Patentansprüche**

1. Sekundärbatterie (1), aufweisend:

   eine Elektrodenanordnung (10), die zumindest eine erste Elektrode (11), zumindest eine zweite Elektrode (12) und einen Separator (13) aufweist, der zwischen der zumindest einen ersten Elektrode (11) und der zumindest einen zweiten Elektrode (12) angeordnet ist;
   ein Gehäuse (34), das zur Aufnahme der Elektrodenanordnung (10) ausgebildet ist;
   einen positiven Anschluss (21) und einen negativen Anschluss (22), wobei die Anschlüsse (21, 22) ausgebildet sind, die Elektrodenanordnung (10) mit einer externen Vorrichtung elektrisch zu verbinden,
   wobei zumindest eine Oberfläche (S') des Gehäuses (34') eine Vielzahl von Rippen (b) aufweist, wobei jede der Vielzahl der Rippen (b) zumindest eine der Bedingungen (i) bis (iv) erfüllt:

   (i) ein Verhältnis der Höhe (h) der Rippe (b) zur Breite (w) der Rippe (b) liegt im Bereich zwischen 0,02 und 0,5,
   (ii) ein Winkel ($\theta$) der Rippe (b) liegt im Bereich zwischen 2° und 45°, wobei der Winkel ($\theta$) bezüglich einer Verbindungslinie zwischen benachbarten Tälern der Rippe (b) gemessen wird,
   (iii) ein maximaler Krümmungsradius der Rippe (b) liegt im Bereich zwischen 0 und 50% der Breite (w) der Rippe (b),
   (iv) ein Verhältnis der Zahl (N) der Rippen (b), die entlang einer Achse angeordnet sind, die parallel zu einem Rand (A) der Oberfläche (S') verläuft, liegt zur Erstreckung des Randes (A) der Oberfläche (S') im Bereich zwischen 0,02/mm und 0,24/mm, und

   **dadurch gekennzeichnet, dass**
   zumindest einer der Vielzahl der Rippen (b) eine Kreisform aufweist und konzentrisch bezüglich der Mitte der zumindest einen Oberfläche (S') angeordnet ist.

2. Wiederaufladbare Batterie nach Anspruch 1, wobei die zumindest eine Oberfläche (S') des Gehäuses (34') eine ebene Oberfläche ist und wobei der Vorsprung jedes der Vielzahl der Rippen (b) auf die ebene Oberfläche eine Form aufweist, die aus der Gruppe einer länglichen Form, einer Kreisform und einer Dreieckform ausgewählt ist.

3. Wiederaufladbare Batterie nach einem der vorhergehenden Ansprüche, wobei das Gehäuse (34, 34') eine Rechteckform und/oder eine Quaderform aufweist.

4. Wiederaufladbare Batterie nach einem der vorhergehenden Ansprüche, wobei die Zahl der Rippen (b), die auf der Oberfläche (S') des Gehäuses (34') angeordnet sind, im Bereich zwischen 1 und 10 liegt.

5. Wiederaufladbare Batterie nach einem der vorhergehenden Ansprüche, wobei ein Verhältnis der Höhe (h) der Rippe (b) zur Breite (w) der Rippe (b) im Bereich zwischen 0,02 und 0,33 liegt.

6. Wiederaufladbare Batterie nach Anspruch 5, wobei ein Verhältnis der Höhe (h) der Rippe (b) zur Breite (w) der Rippe (b) zwischen 0,026 und 0,188 liegt.

7. Wiederaufladbare Batterie nach einem der vorhergehenden Ansprüche, wobei zumindest zwei der Bedingungen erfüllt sind, die aus der Gruppe der Bedingungen (i) bis (iv) ausgewählt sind.

8. Wiederaufladbare Batterie nach einem der vorhergehenden Ansprüche, wobei zumindest drei der Bedingungen erfüllt sind, die aus der Gruppe der Bedingungen (i) bis (iv) ausgewählt sind.

9. Wiederaufladbare Batterie nach einem der vorhergehenden Ansprüche, wobei alle der Bedingungen (i) bis (iv) erfüllt sind.

10. Wiederaufladbare Batterie nach einem der vorhergehenden Ansprüche, wobei die Vielzahl der Rippen (b) gleichmäßig auf der zumindest einen Oberfläche (S') des Gehäuses (34') verteilt ist.

11. Wiederaufladbare Batterie nach einem der vorhergehenden Ansprüche, wobei die zumindest eine Oberfläche (S') eine Rechteckform aufweist und sich die Vielzahl der Rippen (b) entlang einer ersten Achse und/oder einer zweiten Achse erstrecken, wobei die erste Achse parallel zu einem ersten Rand der rechteckigen Oberfläche (S') verläuft und die zweite Achse parallel zu einem zweiten Rand der rechteckigen Oberfläche (S') und senkrecht zur ersten Achse verläuft.

12. Wiederaufladbare Batterie nach einem der vorhergehenden Ansprüche, wobei die wiederaufladbare Batterie eine Lithium-Sekundärbatterie ist; und/oder wobei die wiederaufladbare Batterie weiterhin eine Deckplatte (30) aufweist, die zum Abdichten einer Öffnung des Gehäuses (34) ausgebildet ist; und/oder wobei die wiederaufladbare Batterie weiterhin ein Lüftungsloch, das in der Deckplatte (30) ausgebildet ist, und eine Lüftungsplatte (39) aufweist, die das Lüftungsloch verschließt.

13. Wiederaufladbare Batterie nach einem der vorhergehenden Ansprüche, wobei die Oberfläche der Vielzahl der Rippen (b) zumindest einen gekrümmten Abschnitt aufweist, wobei der maximale Krümmungsradius des gekrümmten Abschnitts im Bereich zwischen 0 und 50% der Breite (w) der Rippe (b) liegt.

14. Elektrisches Fahrzeug, aufweisend die Sekundärbatterie (1) nach einem der Ansprüche 1 bis 13.


**Revendications**

1. Batterie secondaire (1) comprenant :

un ensemble d'électrodes (10) ayant au moins une première électrode (11), au moins une deuxième électrode (12) et un séparateur (13) interposé entre l'au moins une première électrode (11) et l'au moins une deuxième électrode (12) ;
un boîtier (34) adapté pour recevoir l'ensemble d'électrodes (10) ;
une borne positive (21) et une borne négative (22), les bornes (21, 22) étant adaptées pour connecter électriquement l'ensemble d'électrodes (10) à un dispositif externe,
où au moins une surface (S') du boîtier (34') comprend une pluralité d'arêtes (b),
où chacune de la pluralité d'arêtes (b) est conforme à au moins l'une des conditions (i) à (iv) :

(i) un rapport de la hauteur (h) de l'arête (b) sur la largeur (w) de l'arête (b) est compris entre 0,02 et 0,5,
(ii) un angle (θ) de l'arête (b) est compris entre 2° et 45°, l'angle (θ) étant mesuré par rapport à une ligne de connexion entre des creux adjacents de l'arête (b),

(iii) un rayon maximal de courbure de l'arête (b) est compris entre 0 et 50% de la largeur (w) de l'arête (b),

(iv) un rapport du nombre (N) d'arêtes (b) disposées le long d'un axe parallèle à un bord (A) de la surface (S') sur l'étendue du bord (A) de la surface (S') est compris entre 0,02/mm et 0,24/mm et

**caractérisée en ce que**

au moins l'une de la pluralité d'arêtes (b) a une forme circulaire et est disposée de manière concentrique par rapport au centre de l'au moins une surface (S').

2. Batterie rechargeable de la revendication 1, dans laquelle l'au moins une surface (S') du boîtier (34') est une surface plane et dans laquelle la projection de chacune de la pluralité d'arêtes (b) sur la surface plane comprend une forme choisie dans le groupe constitué d'une forme assez longue, d'une forme circulaire et d'une forme triangulaire.

3. Batterie rechargeable selon l'une quelconque des revendications précédentes, dans laquelle le boîtier (34, 34') a une forme rectangulaire et/ou une forme cubique.

4. Batterie rechargeable selon l'une quelconque des revendications précédentes, dans laquelle le nombre d'arêtes (b) disposées sur la surface (S') du boîtier (34') est compris entre 1 et 10.

5. Batterie rechargeable selon l'une quelconque des revendications précédentes, dans laquelle un rapport de la hauteur (h) de l'arête (b) sur la largeur (w) de l'arête (b) est compris entre 0,02 et 0,33.

6. Batterie rechargeable selon la revendication 5, dans laquelle un rapport de la hauteur (h) de l'arête (b) sur la largeur (w) de l'arête (b) est compris entre 0,026 et 0,188.

7. Batterie rechargeable selon l'une quelconque des revendications précédentes, dans laquelle au moins deux des conditions choisies dans le groupe de conditions (i) à (iv) sont remplies.

8. Batterie rechargeable selon l'une quelconque des revendications précédentes, dans laquelle au moins trois des conditions choisies dans le groupe de conditions (i) à (iv) sont remplies.

9. Batterie rechargeable selon l'une quelconque des revendications précédentes, dans laquelle toutes les conditions (i) à (iv) sont remplies.

10. Batterie rechargeable selon l'une quelconque des revendications précédentes, dans laquelle la pluralité d'arêtes (b) est uniformément répartie sur l'au moins une surface (S') du boîtier (34').

11. Batterie rechargeable selon l'une quelconque des revendications précédentes, dans laquelle l'au moins une surface (S') a une forme rectangulaire et la pluralité d'arêtes (b) s'étendent le long d'au moins l'un d'un premier axe et d'un deuxième axe, le premier axe étant parallèle à un premier bord de la surface rectangulaire (S') et le deuxième axe étant parallèle à un deuxième bord de la surface rectangulaire (S') et perpendiculaire au premier axe.

12. Batterie rechargeable selon l'une quelconque des revendications précédentes, dans laquelle la batterie rechargeable est une batterie secondaire au lithium ; et/ou dans laquelle la batterie rechargeable comprend en outre une plaque de couvercle (30) adaptée pour assurer l'étanchéité d'une ouverture du boîtier (34) ; et/ou dans laquelle la batterie rechargeable comprend en outre un trou d'évent formé dans la plaque de couvercle (30) et une plaque d'évent (39) fermant le trou d'évent.

13. Batterie rechargeable selon l'une quelconque des revendications précédentes, dans laquelle la surface de la pluralité d'arêtes (b) a au moins une partie incurvée, le rayon maximal de courbure de la partie incurvée est compris entre 0 et 50% de la largeur (w) de l'arête (b).

14. Véhicule électrique comprenant la batterie secondaire (1) de l'une quelconque des revendications 1 à 13.

# FIG. 1

# FIG. 2

# FIG. 3

# FIG. 4A

# FIG. 4B

# FIG. 5

(BF)  (BR)

## FIG. 6A

## FIG. 6B

## FIG. 7

FIG. 8A

STRESS

FIG. 8B

DISPLACEMENT AMOUNT

FIG. 8C

# FIG. 9A

# FIG. 9B

# FIG. 10A

# FIG. 10B

# FIG. 11A

# FIG. 11B

## FIG. 12A

## FIG. 12B

FIG. 13A

STRESS

FIG. 13B

DISPLACEMENT AMOUNT

FIG. 13C

FIG. 14A

STRESS

FIG. 14B

DISPLACEMENT AMOUNT

FIG. 14C

# FIG. 15A

STRESS

# FIG. 15B

DISPLACEMENT AMOUNT

## FIG. 15C

## FIG. 15D

**EP 2 348 557 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1447864 A1
- JP 10255727 A
- US 6033800 A